# EUROPÄISCHE PATENTSCHRIFT

(11) **EP 0 932 546 B1**
(45) Veröffentlichungstag und Bekanntmachung des Hinweises auf die Patenterteilung: **04.06.2003**
(21) Anmeldenummer: 97947709.8
(22) Anmeldetag: 28.10.1997
(51) Int. Cl.: B62K 25/28

(54) **ZWEIRÄDRIGES FAHRZEUG, INSBESONDERE FAHRRAD**
TWO WHEELED VEHICLE, ESPECIALLY A BICYCLE
VEHICULE A DEUX ROUES, NOTAMMENT UNE BICYCLETTE

(30) Priorität: 28.10.1996 DE 29618383 U
(43) Veröffentlichungstag der Anmeldung: 04.08.1999
(73) Patentinhaber: Procycle Group Inc., St. Georges, Quebec G6A 1A1 (CA)
(72) Erfinder: Kramer-Massow, Klaus, 79104 Freiburg (DE)
(74) Vertreter: Harrison, Michael Charles
(86) Internationale Anmeldenummer: DE9702498
(87) Internationale Veröffentlichungsnummer: WO98018671

(56) Entgegenhaltungen:
- DE-A- 4 435 482
- US-A- 5 409 249
- US-A- 5 452 910

## Beschreibung

Die Erfindung betrifft ein zweirädriges Fahrzeug, insbesondere Fahrrad, nach den jeweiligen Oberbegriffen der nebengeordneten Ansprüche 1 bis 3.

Das besondere Anwendungsgebiet der erfindungsgemäßen Hinterradfederung mit einer entsprechenden Radaufhängung sind Fahrräder. Grundsätzlich ist aber das allgemeine erfindungsgemäße Prinzip auch für motorbetriebene, zweirädrige Fahrzeuge geeignet und einsetzbar.

Die US-A-5 409 249 zeigt eine Hinterradfederung für ein Fahrrad der eingangs angegebenen Art. Dabei ist an einem Rahmen im Bereich des Tretlagers ein erster Hebel in einem Lager verschwenkbar gelagert. Am hinteren Ende dieses ersten Hebels ist an einem weiteren Schwenklager ein Radträgerteil ebenfalls verschwenkbar gelagert. Zwischen dessen oberem Ende und dem Rahmen ist über Schwenklager ein zweiter Hebel jeweils gelenkig angeordnet. Schließlich befindet sich noch zwischen dem Radträgerteil und dem zweiten Hebel ein Federungs- und Dämpfungselement. Die Achse des Hinterrades befindet sich oberhalb des Anlenkpunktes des ersten Hebels am Radträgerteil. - Der Nachteil der speziellen Anordnung des Lagerpunktes des ersten Hebels unterhalb der Achse des Hinterrades liegt darin, daß die Achse beim Federvorgang eine ungleichmäßig gekrümmte Bewegungsbahn durchläuft. Der entscheidende Nachteil hiervon ist der sogenannte Pedalrückschlag, bei dem beim Einfedern die Kette gespannt bzw. verkürzt wird. Ein weiterer Nachteil besteht darin, daß die Ketten den ersten (unteren) Hebel kreuzt, mit der Gefahr, daß die Kette eingeklemmt werden kann. Schließlich muß das Lager des unteren ersten Hebels nahe dem Tretlager angeordnet werden mit dem Nachteil, daß aufgrund der örtlichen Enge zum Tretlager das Lager schwach dimensioniert ist.

Davon ausgehend liegt der Erfindung die **Aufgabe** zugrunde, ein zweirädriges Fahrzeug, insbesondere Fahrrad zu schaffen, bei dem ein Pedalrückschlag vermieden wird.

Die technische **Lösung** ist gekennzeichnet durch die Merkmale der jeweiligen Kennzeichen der nebengeordneten Ansprüche 1 bis 3.

Dadurch ist ein Viergelenksystem einer Zweiradhinterradfederung mit einer stabilen, großdimensionierten Lagerung der Hinterbauschwinge am Rahmen und gleichzeitig eine antriebsund bremseinflußfreie Federungskinematik ohne wesentlichen Pedalrückschlag geschaffen. Die Grundidee der Hinterradfederung besteht dabei darin, daß das hintere Radträgerteil für das Hinterrad über zwei Hebel am Rahmen gelenkig angeordnet ist und somit dieses Gelenksystem eine am Rahmen angeordnete Hinterbauschwinge definiert, bei der die Hinterradachse bei einer Federbewegung eine in etwa kreisförmige Bewegungsbahn durchführt. Die beiden Hebel sind dabei jeweils an ihren beiden Enden über Drehlager am Rahmen sowie am Radträgerteil angeordnet. Dies gilt gleichermaßen auch für das Federungselement, welches ebenfalls an seinen beiden Enden jeweils über ein Drehlager am Rahmen bzw. an der Hinterbauschwinge angeordnet ist. Bei dem Federungselement handelt es sich vorzugsweise um eine Druckfeder, nämlich insbesondere um eine Wendelfeder, eine Gasfeder oder eine Elastomerfeder. Daß das Schwenklager des ersten Hebels am Radträgerteil erfindungsgemäß oberhalb der Achse des Hinterrades liegt, ist so zu verstehen, daß das Schwenklager nicht im Bereich der Achse des Hinterrades liegt und somit der erste Hebel oberhalb der beiden Kettenstränge läuft, wodurch unter anderem ein Verklemmen der Kette zwischen dem Laufrad und dem Hebel vermieden wird. Der besondere Vorteil dieser Anordnung des ersten Hebels bei der erfindungsgemäßen Zweiradhinterradfederung liegt in den besonderen kinematischen Vorteilen und Eigenschaften der Gesamthebelanordnung, nämlich in einer antriebs- und bremseinflußfreien Federungskinematik. So findet beim Antreten ein Ausfederungsvorgang statt, bei dem die Achse des Hinterrades eine Kraft nach unten erfährt mit dem Effekt, daß die Reibungskraft zwischen dem Hinterrad und dem Boden erhöht und damit ein Durchrutschen des Hinterrades verhindert wird. Umgekehrt, beim Bremsen erfolgt ein leichtes Einfedern, bei dem das Hinterrad sich nach oben und in der Konsequenz davon der Sattel nach unten bewegt. Dadurch wird ein sogenannter Überwurf des Fahrers verhindert. Schließlich besitzt das erfindungsgemäße Federungssystem ein sehr gutes Ansprechverhalten für Schläge während des Fahrens. Dabei besitzt die Federung zu Beginn des Federvorganges ein relativ hartes, in der Mitte ein feines und am Ende wiederum ein relativ hartes Ansprechverhalten. Durch das harte Ansprechverhalten am Anfang des Federvorganges geht durch das Fahrergewicht nur wenig an Federweg verloren. Insgesamt ist dadurch eine optimale Hebelkinematik beim Einfederungsvorgang geschaffen. Bei diesem Einfederungsvorgang wird sich dann bei einer Abwinklung des Hebels nach oben der Winkel zwischen dem Radträgerteil und dem Hebel bei maximaler Einfederung auf beispielsweise etwa 45° verringern, wobei der zweite Hebel relativ zum Radträgerteil gesehen nach hinten wegkippt. Sofern der zweite Hebel nach oben hin abgewinkelt ist, liegt der Winkelbereich zwischen 90° und 180°, während bei einer Abwinklung nach unten hin der Winkelbereich zwischen 270° und 360° liegt. Die 0-Grad-Linie wird dabei durch die Verbindungsgerade der Schwenklager der beiden Hebel am Radträgerteil definiert.

Eine Weiterbildung gemäß Anspruch 4 schlägt vor, daß das Schwenklager des ersten Hebels am Radträgerteil in der Erdvertikalrichtung gesehen mindestens 20 mm oberhalb der Achse des Hinterrades liegt. Auch dadurch ist eine optimale Position für das Schwenklager des ersten Hebels am Radträgerteil geschaffen, ohne daß Platzprobleme für den ersten Hebel auftreten. Im Zusammenwirken mit der Gesamtanordnung der Hebelvorrichtung ergeben sich dadurch optimale kinematische Verhältnisse.

Eine vorteilhafte Weiterbildung des erfindungsgemäßen zweirädrigen Fahrzeugs schlägt gemäß Anspruch 5 vor, daß das Schwenklager des ersten Hebels am Rahmen oberhalb des Lagers des Antriebskettenblattes liegt. Vorzugsweise liegt das Schwenklager dabei gemäß Anspruch 6 oberhalb des Antriebskettenblattes. "Oberhalb des Antriebskettenrades" ist derart zu verstehen, daß das Schwenklager außerhalb des Kreisbereiches des Antriebskettenrades liegt, d.h. oberhalb des Verlaufes der Antriebskette. Dies hat den Vorteil, daß der erste Hebel im Bereich des Antriebskettenblattes platzmäßig nicht stört. Für den Fall, daß es sich um mehrere Antriebskettenräder handelt, kann das Schwenklager oberhalb des größten Antriebskettenblattes liegen. Es ist aber auch denkbar, daß das Schwenklager nur oberhalb des mittleren Kettenblattes liegt, jedoch im Kreisbereich des größten Antriebskettenrades. In einer weiteren Alternative ist es denkbar, daß das Schwenklager oberhalb des kleinsten Antriebskettenrades, jedoch im Kreisbereich des mittleren Antriebskettenrades liegt. Schließlich ist es auch denkbar, daß das Schwenklager im Übergangsbereich von einem Kettenrad zu einem anderen Kettenrad liegt.

Schließlich wird in einer Weiterbildung gemäß Anspruch 7 vorgeschlagen, daß dem Federungselement ein Dämpfungselement zugeordnet ist.

Zwei Ausführungsbeispiele eines erfindungsgemäßen zweirädrigen Fahrzeugs in Form eines Fahrrads werden nachfolgend anhand der Zeichnungen beschrieben. In diesen zeigt:
- Fig. 1 a und b: eine erste Ausführungsform des Fahrrads in der ungefederten Grundstellung sowie in der maximal eingefederten Stellung;
- Fig. 2: eine alternative Anordnung des zweiten Hebels sowie der Feder.

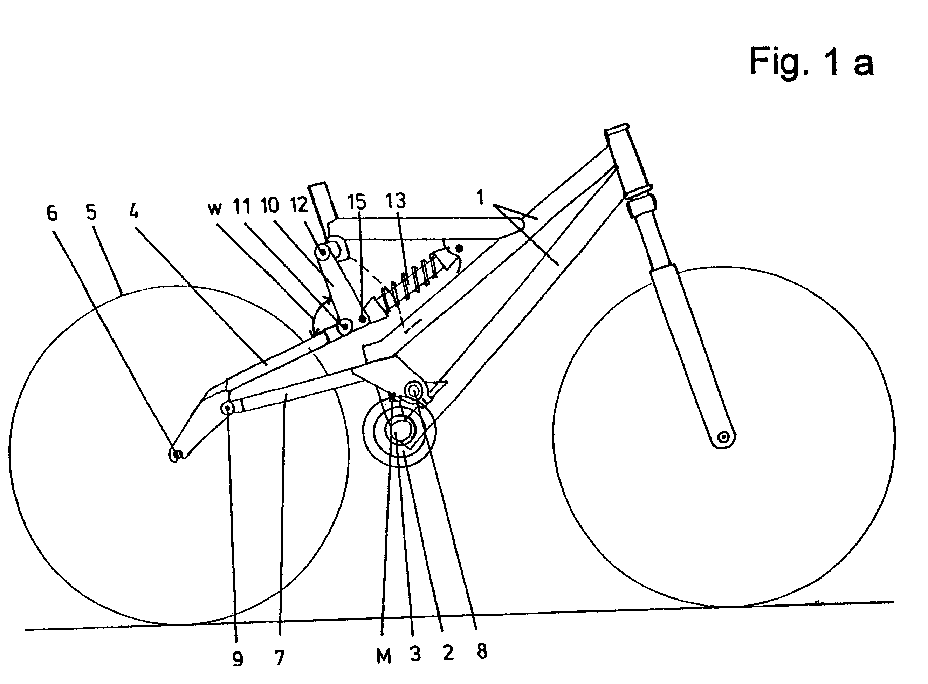

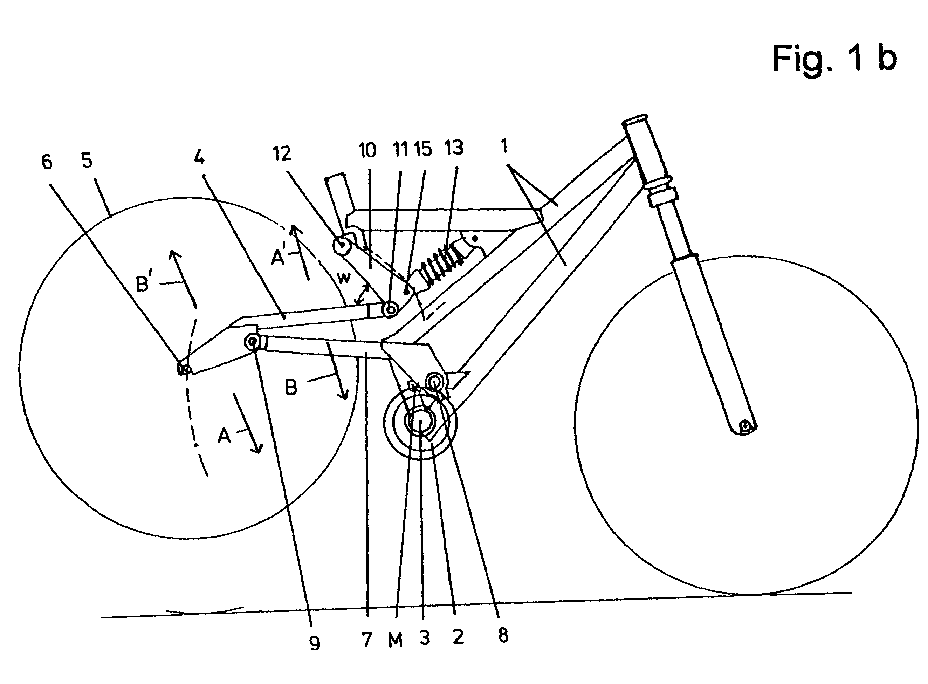

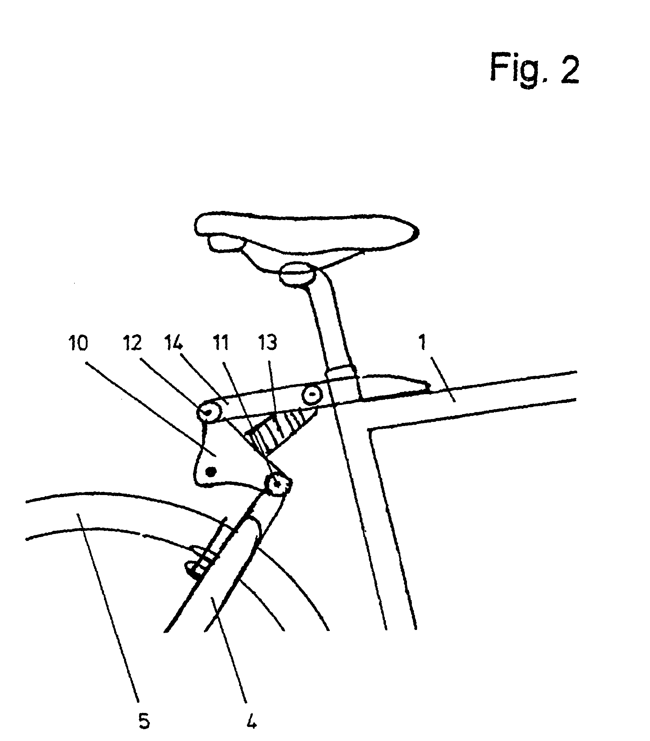

In den Fig. 1 a und b ist die Hauptausführungsform des erfindungsgemäßen Fahrrades dargestellt, während Fig. 2 eine Alternative hierzu zeigt.

Das Fahrrad der ersten Ausführungsform in den Fig. 1 a und b weist einen Rahmen 1 auf. Dieser Rahmen 1 weist im unteren Bereich in der Regel einen Satz von 3 Antriebskettenblättern 2 mit Lager 3 auf.

Am Rahmen 1 angeordnet ist weiterhin ein Radträgerteil 4, an dessen hinteren, unteren Ende ein Hinterrad 5 um eine Achse 6 drehbar gelagert ist. Zwischen dem Rahmen 1 und dem Radträgerteil 4 ist ein unterer, erster Hebel 7 angeordnet, wobei die endseitige Verbindung jeweils über Schwenklager 8, 9 erfolgt Das vordere Schwenklager 8 befindet sich dabei in dem dargestellten Ausführungsbeispiel oberhalb des größten Antriebskettenblattes 2. Es ist aber auch denkbar, daß das vordere Schwenklager 8 nur oberhalb des mittleren oder gar des kleinsten Antriebskettenblattes 2 liegt. Der Hebel 7 ist im übrigen im Bereich dieses vorderen Schwenklagers 8 nach unten hin abgewinkelt. Das hintere Schwenklager 9 befindet sich in einem gewissen Abstand oberhalb der Achse 6 des Hinterrades 5, nämlich in etwa in einem Abstand von 1/3 bezüglich der Gesamtlänge des Radträgerteils 4. In diesem Bereich ist das Radträgerteil 4 ebenfalls stumpf abgewinkelt.

Das obere Ende des Radträgerteils 4 ist über einen zweiten Hebel 10 ebenfalls über Schwenklager 11, 12 mit dem Rahmen 1 verbunden. In der Grundstellung des Fahrrades, wie sie in Fig. 1 a dargestellt ist, ist dabei der zweite Hebel 10 nach oben hin abgewinkelt. Der Winkel zwischen der Verbindungsgeraden zwischen den Schwenklagem 9 und dem Schwenklager 11 einerseits sowie zwischen der Verbindungsgeraden zwischen dem Schwenklager 11 und dem Schwenklager 12 beträgt dabei ca. 110°. Außerdem ist im Bereich des unteren Schwenklagers 11 des Hebels 10 / Radträgerteils 4 am Hebel 10 ein Federungs- und/oder Dämpfungselement 13 mit seinem einen Ende über ein Schwenklager 15 angelenkt, während es mit seinem anderen Ende am Rahmen 1 angelenkt ist. In der ungefederten Grundstellung des Fahrrads in Fig. 1 a ist dabei erkennbar, daß das Radträgerteil 4 und das Federungs- und/oder Dampfungselement 13 im wesentlichen auf einer miteinander fluchtenden Linie liegen. Besonders wesentlich bei der Anordnung des Federungs- und/oder Dämpfungselements 13 ist, daß der Abstand der Schwenklager 11, 12 im wesentlichen dem Abstand zwischen dem Schwenklager 15 des Federungs- und/oder Dämpfungselements 13 und dem Schwenkelement 12 beträgt. Dadurch werden beim Einfedem am Hebel 10 angreifende Hebelkräfte vermieden.

Die Funktionsweise der ersten Ausführungsform der Fig. 1 a und b ist wie folgt:

Die (nichteingefederte) Ruhestellung des Fahrrads ist in Fig. 1 a dargestellt, während Fig. 1 b die maximal eingefederte Stellung zeigt. Durch die Anordnung der vier Schwenklager 8, 9, 11, 12 der beiden Hebel 7, 10 beschreibt das Hinterrad 5 beim Einfedem eine Kompensationskurve. Insbesondere beschreibt die Achse 6 des Hinterrads 5 eine annähernde Kreisbewegung (in Fig. 1 b gestrichelt dargestellt) um das Lager 3 des Antriebskettenblatts 2 oder um einen dem Lager 3 beabstandeten Mittelpunkt M. Der Abstand des Mittelpunktes M vom Lager 3 kann dabei in etwa bis zum Kreisumfang des größten Antriebskettenblattes 2 reichen. Die Antriebskräfte haben dabei keinen Einfluß auf den Einfederungsvorgang oder wirken diesem entgegen. Die Bremskräfte haben gleichermaßen keinen Einfluß auf den Einfederungsvorgang oder unterstützen diesen. Durch die Anordnung der Punkte Achse 6 / Schwenklager 9 / Schwenklager 12 wird im Schwenklager 9 eine Umlenkung der Antriebskraft A in die Kraft A' sowie eine Umlenkung der Bremskraft B in die Kraft B' erreicht. Je größer dabei der Abstand des Schwenklagers 9 von der Achse 6 des Hinterrads 5 ist, desto größer wird die Kraft A' (bezüglich der Antriebskraft A) und desto kleiner die Kraft B' (bezüglich der Bremskraft B). Je nach dem Winkel w zwischen der Verbindungslinie zwischen den Schwenklagern 9, 11 einerseits und der Verbindungslinie zwischen den Schwenklagem 11, 12 andererseits bewirken die Umkehrkräfte A' und B' bezüglich der Bewegung der Achse 6 des Hinterrads 5 beim Antritt (Antriebskraft A) ein "Ausfedern" (wodurch ein "Wegrutschen" verhindert wird) sowie beim Bremsen (Bremskraft B) analog ein "Einfedern" (welches der "Überwerftendenz" des Fahrers beim Bremsen entgegenwirkt). Beim Einfedem liegt dabei der Winkel w etwa im Bereich zwischen 45° und 90°, während er beim Ausfedem zwischen 90° und 180° liegt. Wenn allerdings der Winkel w ungefähr - wie im dargestellten Ausführungsbeispiel - bei ungefähr 110° liegt, ist der Bremseinfluß sowie der Antriebseinfluß eher klein. Grundsätzlich bestimmt die Wahl des Punktes für das Schwenklager 9 (zusammen mit den anderen Lagerpunkten) die Form der Raderhebungskurve, nämlich der Bewegung der Achse 6 beim Einfedern.

Die Vorteile der erfindungsgemäßen Federungskinematik sind wie folgt:

Grundsätzlich liegt der Vorteil der erfindungsgemäßen Kinematik gegenüber herkömmlichen Federungssystemen im Zusammenspiel sämtlicher erreichbarer Einzelvorteile. So wird durch eine ideale Raderhebungskurve kein Pedalrückschlag beim Federvorgang bewirkt. Durch den "Umkehreffekt" im Schwenklager 9 wird kein Einfedern beim Antritt, d.h. ein Kraftverlust bewirkt, eher ein leichtes Ausfedem mit mehr Bodenhaftung. Beim Bremsen resultiert kein Ausfedern, d. h. keine Überschlagsgefahr beim scharfen Bremsen (sogenanntes Bremsnicken), eher ein leichtes Einfedem beim Bremsen. Durch die relativ hohe Anordnung des Schwenklagers 9 resultiert daraus ein verbessertes Ansprechverhalten der Federung. Weiterhin liegt durch die hohe Lage der Kettenstrebe die Kette frei. Ein Einklemmen der Kette ist dadurch ausgeschlossen. Weiterhin ist durch die kompakte, nicht ausladende Konstruktion mit kurzen Streben eine relativ leichte Gesamtkonstruktion möglich. Schließlich wird durch die Verteilung der Verwindungskräfte auf vier Lagerpunkte eine erhöhte Seiten- sowie Verwindungssteifigkeit erzielt.

Fig. 2 zeigt im Ausschnitt eine modifizierte Anordnung des Hebels 10 sowie der Federungs-und/oder Dämpfungselements 13 am Rahmen 1. In diesem Fall weist der Rahmen 1 eine nach hinten auskragende Haltevorrichtung 14 auf, an dessen hinterem Ende der zweite Hebel 10 mit seinem oberen Schwenklager 12 angelenkt ist. In der Mitte des zweiten Hebels 10 ist das eine Ende des Federungs- und/oder Dämpfungselements 13 festgelegt, während das andere Ende an der Haltevorrichtung 14 festgelegt ist. Bei dieser Ausführungsform ist somit das Federungs- und/oder Dämpfungselement 13 bezüglich des Radträgerteils 4 seitlich versetzt. Diese Anordnung des oberen Hebels 10 an der Haltevorrichtung 4 erlaubt die Anbringung eines (nicht dargestellten) Gepäckträgers.

### Bezugszeichenliste

- 1: Rahmen
- 2: Antriebskettenbtatt
- 3: Lager
- 4: Radträgerteil
- 5: Hinterrad
- 6: Achse
- 7: Hebel
- 8, 9: Schwenklager
- 10: Hebel
- 11, 12: Schwenklager
- 13: Federungs-/oder Dämpfungselement
- 14: Haltevorrichtung
- 15: Schwenklager

- A: Antriebskraft
- A': Kraft
- B: Bremskraft
- B': Kraft

- M: Mittelpunkt
- w: Winkel

## Patentansprüche

1. Zweirädriges Fahrzeug, insbesondere Fahrrad,
mit einem Rahmen (1), mit einem unten am Rahmen angeordneten Antriebskettenblatt (2)
sowie mit einem hinten am Rahmen (1) an einem Radträgerteil (4) federnd gelagerten Hinterrad (5),
mit einem zwischen dem Rahmen (1) und dem Radträgerteil (4) jeweils verschwenkbar angeordneten ersten Hebel (7),
mit einem zwischen dem oberen Ende des Radträgerteils (4) und dem Rahmen (1) jeweils verschwenkbar angeordneten zweiten Hebel (10) sowie
mit einem zwischen dem Radträgerteil (4) und einem weiteren Bauteil jeweils verschwenkbar angeordneten Federungselement (13),
**dadurch gekennzeichnet,**
**daß** das Schwenklager (9) des ersten Hebels (7) am Radträgerteil (4) oberhalb der Achse (6) des Hinterrades (5) liegt,
**daß** das Schwenklager (9) des ersten Hebels (7) am Radträgerteil (4) von der Achse (6) des Hinterrades (5) aus in Richtung auf das Schwenklager (11) gesehen zwischen dem 0,045- bis 0,8-fachen, insbesondere dem 0,25- bis 0,4-fachen der Länge des Radträgerteils (4) liegt,
**daß** das Federungselement (13) zwischen dem Rahmen (1) und dem Radträgerteil (4) angeordnet ist und
**daß** in der Ruhestellung der Federung der Winkel (w) zwischen der Verbindungsgeraden zwischen dem Schwenklager (9) des ersten Hebels (7) am Radträgerteil (4) und dem Schwenklager (11) des Radträgerteils (4) am zweiten Hebel (10) einerseits und der Verbindungsgeraden zwischen dem Schwenklager (11) des Radträgerteils (4) am zweiten Hebel (10) und dem Schwenklager (12) des zweiten Hebels (10) am Rahmen (1) andererseits zwischen 90° und 180° (bei der Erstreckung des Hebels (10) nach oben hin) oder - in der gleichen Winkelrichtung gesehen - zwischen 270° und 360° (bei der Erstreckung des Hebels (10) nach unten hin) liegt.

2. Zweirädriges Fahrzeug, insbesondere Fahrrad,
mit einem Rahmen (1), mit einem unten am Rahmen angeordneten Antriebskettenrad (2)
sowie mit einem hinten am Rahmen (1) an einem Radträgerteil (4) federnd gelagerten Hinterrad (5),
mit einem zwischen dem Rahmen (1) und dem Radträgerteil (4) jeweils verschwenkbar angeordneten ersten Hebel (7),
mit einem zwischen dem oberen Ende des Radträgerteils (4) und dem Rahmen (1) jeweils verschwenkbar angeordneten zweiten Hebel (10) sowie
mit einem zwischen zwei Bauteilen jeweils verschwenkbar angeordneten Federungselement (13),
**dadurch gekennzeichnet,**
**daß** das Schwenklager (9) des ersten Hebels (7) am Radträgerteil (4) oberhalb der Achse (6) des Hinterrades (5) liegt,
**daß** das Schwenklager (9) des ersten Hebels (7) am Radträgerteil (4) von der Achse (6) des Hinterrades (5) aus in Richtung auf das Schwenklager (11) gesehen zwischen dem 0,045- bis 0,8-fachen, insbesondere dem 0,25- bis 0,4-fachen der Länge des Radträgerteils (4) liegt,
**daß** das Federungselement (13) zwischen dem Rahmen (1) und dem ersten Hebel (7) angeordnet ist und
**daß** in der Ruhestellung der Federung der Winkel (w) zwischen der Verbindungsgeraden zwischen dem Schwenklager (9) des ersten Hebels (7) am Radträgerteil (4) und dem Schwenklager (11) des Radträgerteils (4) am zweiten Hebel (10) einerseits und der Verbindungsgeraden zwischen dem Schwenklager (11) des Radträgerteils (4) am zweiten Hebel (10) und dem Schwenklager (12) des zweiten Hebels (10) am Rahmen (1) andererseits zwischen 90° und 180° (bei der Erstreckung des Hebels (10) nach oben hin) oder - in der gleichen Winkelrichtung gesehen - zwischen 270° und 360° (bei der Erstreckung des Hebels (10) nach unten hin) liegt.

3. Zweirädriges Fahrzeug, insbesondere Fahrrad,
mit einem Rahmen (1), mit einem unten am Rahmen angeordneten Antriebskettenrad (2),
sowie mit einem hinten am Rahmen (1) an einem Radträgerteil (4) federnd gelagerten Hinterrad (5),
mit einem zwischen dem Rahmen (1) und dem Radträgerteil (4) jeweils verschwenkbar angeordneten ersten Hebel (7),
mit einem zwischen dem oberen Ende des Radträgerteils (4) und dem Rahmen (1) jeweils verschwenkbar angeordneten zweiten Hebel (10) sowie
mit einem zwischen dem zweiten Hebel (10) und einem weiteren Bauteil jeweils verschwenkbar angeordneten Federungselement (13),
**dadurch gekennzeichnet,**
**daß** das Schwenklager (9) des ersten Hebels (7) am Radträgerteil (4) oberhalb der Achse (6) des Hinterrades (5) liegt,
**daß** das Schwenklager (9) des ersten Hebels (7) am Radträgerteil (4) von der Achse (6) des Hinterrades (5) aus in Richtung auf das Schwenklager (11) gesehen zwischen dem 0,045- bis 0,8-fachen, insbesondere dem 0,25- bis 0,4-fachen der Länge des Radträgerteils (4) liegt,
**daß** das Federungselement (13) zwischen dem Rahmen (1) und dem zweiten Hebel (10) angeordnet ist und
**daß** in der Ruhestellung der Federung der Winkel (w) zwischen der Verbindungsgeraden zwischen dem Schwenklager (9) des ersten Hebels (7) am Radträgerteil (4) und dem Schwenklager (11) des Radträgerteils (4) am zweiten Hebel (10) einerseits und der Verbindungsgeraden zwischen dem Schwenklager (11) des Radträgerteils (4) am zweiten Hebel (10) und dem Schwenklager (12) des zweiten Hebels (10) am Rahmen (1) andererseits zwischen 90° und 180° (bei der Erstreckung des Hebels (10) nach oben hin) oder - in der gleichen Winkelrichtung gesehen - zwischen 270° und 360° (bei der Erstreckung des Hebels (10) nach unten hin) liegt.

4. Fahrzeug nach einem der Ansprüche 1 bis 3,
**dadurch gekennzeichnet,**
**daß** das Schwenklager (9) des ersten Hebels (7) am Radträgerteil (4) in Erdvertikalrichtung gesehen mindestens 20 mm oberhalb der Achse (6) des Hinterrads (5) liegt.

5. Fahrzeug nach einem der Ansprüche 1 bis 4,
**dadurch gekennzeichnet,**
**daß** das Schwenklager (8) des ersten Hebels (7) am Rahmen (1) oberhalb des Lagers (3) des unten am Rahmen (1) angeordneten Antriebskettenblattes (2) liegt.

6. Fahrzeug nach Anspruch 5,
**dadurch gekennzeichnet,**
**daß** das Schwenklager (8) oberhalb des Antriebskettenblatts (2) liegt.

7. Fahrzeug nach einem der Ansprüche 1 bis 6,
**dadurch gekennzeichnet,**
**daß** dem Federungselement (13) ein Dämpfungselement zugeordnet ist.

## Claims

1. A two-wheeled vehicle, particularly a bicycle,
with a frame (1) with a chain drive wheel (2) arranged low down on the frame, together with a rear wheel (5) resiliently sprung by a wheel support component (4) on the rear of the frame (1),
with a first swivelling lever (7) arranged between the frame (1) and the wheel support component (4),
and a second swivelling lever (10) arranged between the upper end of the wheel support component (4) and the frame (1), as well as
with a swivelling suspension element (13) arranged between the wheel support component (4) and a further component,
**characterised in that**:
the swivel bearing (9) of the first lever (7) on the wheel support component (4) is located high above the axle (6) of the rear wheel (5);
and **in that** the swivel bearing (9) of the first lever (7) on the wheel support component (4) is between 0.045 and 0.08 times, and particularly 0.25 to 0.4 times the length of the wheel support component (4), when viewed from the axle (6) of the rear wheel (5) in the direction of the swivel bearing (11);
and **in that** the suspension element (13) is arranged between the frame (1) and the wheel support component (4);
and **in that**, when the suspension is in the rest position, angle (w) between the straight connecting members between the swivel bearing (9) of the first lever (7) on the wheel support component (4) and the swivel bearing (11) of the wheel support component (4) at the second lever (10) on the one hand, and the straight connecting members between the swivel bearing (11) of the wheel support component (4) at the second lever (10) and the swivel bearing (12) of the second lever (10) on the frame (1) on the other hand, is between 90° and 180° (when lever (10) extends upwards) or, viewing the angle in the same direction, between 270° and 360° (when lever (10) extends downwards).

2. A two-wheeled vehicle, particularly a bicycle,
with a frame (1) with a chain drive wheel (2) arranged low down on the frame, together with a rear wheel (5) resiliently sprung by a wheel support component (4) on the rear of the frame (1),
with a first swivelling lever (7) arranged between the frame (1) and the wheel support component (4),
with a second swivelling lever (10) arranged between the upper end of the wheel support component (4) and the frame (1), as well as
with a swivelling suspension element (13) arranged between two components,
**characterised in that**:
the swivel bearing (9) of the first lever (7) on the wheel support component (4) is located high above the axle (6) of the rear wheel (5);
and **in that** the swivel bearing (9) of the first lever (7) on the wheel support component (4) is between 0.045 and 0.08 times, and particularly 0.25 to 0.4 times the length of the wheel support component (4), when viewed from the axle (6) of the rear wheel (5) in the direction of the swivel bearing (11);
and **in that** the suspension element (13) is arranged between the frame (1) and the first lever (7),
and **in that**, when the suspension is in the rest position, angle (w) between the straight connecting members between the swivel bearing (9) of the first lever (7) on the wheel support component (4) and the swivel bearing (11) of the wheel support component (4) at the second lever (10) on the one hand, and the straight connecting members between the swivel bearing (11) of the wheel support component (4) at the second lever (10) and the swivel bearing (12) of the second lever (10) on the frame (1) on the other hand, is between 90° and 180° (when lever (10) extends upwards) or, viewing the angle in the same direction, between 270° and 360° (when lever (10) extends downwards).

3. A two-wheeled vehicle, particularly a bicycle,
with a frame (1) that has a chain drive wheel (2) arranged low down on the frame,
together with a rear wheel (5) resiliently sprung by a wheel support component (4) on the rear of the frame (1),
with a first swivelling lever (7) arranged between the frame (1) and the wheel support component (4),
with a second swivelling lever (10) arranged between the upper end of the wheel support component (4) and the frame (1), as well as
with a swivelling suspension element (13) arranged between the second lever (10) and a further component,
**characterised in that**:
the swivel bearing (9) of the first lever (7) on the wheel support component (4) is located high above the axle (6) of the rear wheel (5);
and **in that** the swivel bearing (9) of the first lever (7) on the wheel support component (4) is between 0.045 and 0.08 times, and particularly 0.25 to 0.4 times the length of the wheel support component (4), when viewed from the axle (6) of the rear wheel (5) in the direction of the swivel bearing (11);
and **in that** the suspension element (13) is arranged between the frame (1) and the second lever (10),
and **in that**, when the suspension is in the rest position, angle (w) between the straight connecting members between the swivel bearing (9) of the first lever (7) on the wheel support component (4) and the swivel bearing (11) of the wheel support component (4) at the second lever (10) on the one hand, and the straight connecting members between the swivel bearing (11) of the wheel support component (4) at the second lever (10) and the swivel bearing (12) of the second lever (10) on the frame (1) on the other hand, is between 90° and 180° (when lever (10) extends upwards) or, viewing the angle in the same direction, between 270° and 360° (when lever (10) extends downwards).

4. A vehicle according to one of claims 1 to 3,
**characterised in that**:
the swivel bearing (9) of the first lever (7) on the wheel support component (4) is located at least 20 mm above axle (6) of the rear wheel (5), when viewed in the plane vertical to the ground.

5. A vehicle according to one of claims 1 to 4,
**characterised in that**:
the swivel bearing (8) of the first lever (7) is located on the frame (1) above the bearing (3) of the chain drive wheel (2) arranged below the frame (1).

6. A vehicle according to claim 5,
**characterised in that**:
the swivel bearing (8) is located above the chain drive wheel (2).

7. A vehicle according to one of claims 1 to 6,
**characterised in that**:
a shock-absorber component is allocated to the suspension element (13).

## Revendications

1. Véhicule à deux roues, notamment bicyclette,
avec un cadre (1), un plateau d'entraînement de chaîne (2) disposé sous le cadre ainsi qu'une roue arrière (5) supportée élastiquement sur un élément support de roue (4) à l'arrière du cadre (1),
avec un premier levier (7) monté pivotant entre le cadre (1) et l'élément support de roue (4),
avec un deuxième levier (10) monté pivotant entre l'extrémité supérieure de l'élément support de roue (4) et le cadre (1),
ainsi qu'avec un élément de suspension (13) monté pivotant entre l'élément support de roue (4) et un autre élément de structure,
**caractérisé par le fait**
**que** le palier d'articulation (9) du premier levier (7) sur l'élément support de roue (4) est situé au dessus de l'axe (6) de la roue arrière (5),
**que** le palier d'articulation (9) du premier levier (7) sur l'élément support de roue (4), est écarté de l'axe (6) de la roue arrière (5), en direction du palier d'articulation (11), d'une distance correspondant à 0,045 à 0,8 fois, en particulier 0,25 à 0,4 fois la longueur de l'élément support de roue (4), que l'élément de suspension (13) est monté pivotant entre le cadre (1) et l'élément support de roue (4) et
**que**, dans la positon de repos de la suspension, l'angle (w) formé entre, d'une part la droite joignant le palier d'articulation (9) du premier levier (7) sur l'élément support de roue (4) et le palier d'articulation (11) de l'élément support de roue (4) sur le deuxième levier (10) et d'autre part la droite joignant le palier d'articulation (11) de l'élément support de roue (4) sur le deuxième levier (10) et le palier d'articulation (12) du deuxième levier (10) sur le cadre (1) est compris entre 90° et 180° (lors d'un mouvement du levier (10) vers le haut) ou -vu dans le même sens angulaire- entre 270° et 360° (lors d'un mouvement du levier (10) vers le bas).

2. Véhicule à deux roues, notamment bicyclette,
avec un cadre (1), une roue d'entraînement de chaîne (2) disposée sous le cadre ainsi qu'une roue arrière (5) supportée élastiquement sur un élément support de roue (4) à l'arrière du cadre (1),
avec un premier levier (7) monté pivotant entre le cadre (1) et l' élément support de roue (4),
avec un deuxième levier (10) monté pivotant entre l'extrémité, supérieure de l'élément support de roue (4) et le cadre (1),
ainsi qu'avec un élément de suspension (13) monté pivotant entre deux éléments de structure,
**caractérisé par le fait**
**que** le palier d'articulation (9) du premier levier (7) sur l'élément support de roue (4) est situé au dessus de l'axe (6) de la roue arrière (5),
**que** le palier d'articulation (9) du premier levier (7) sur l'élément support de roue (4), est écarté de l'axe (6) de la roue arrière (5), en direction du palier d'articulation (11), d'une distance correspondant à 0,045 à 0,8 fois, en particulier 0,25 à 0,4 fois la longueur de l'élément support de roue (4), que l'élément de suspension (13) est monté pivotant entre le cadre (1) et le premier levier (7) et
**que**, dans la positon de repos de la suspension, l'angle (w) formé entre, d'une part la droite joignant le palier d'articulation (9) du premier levier (7) sur l'élément support de roue (4) et le palier d'articulation (11) de l'élément support de roue (4) sur le deuxième levier (10) et d'autre part la droite joignant le palier d'articulation (11) de l'élément support de roue (4) sur le deuxième levier (10) et le palier d'articulation (12) du deuxième levier (10) sur le cadre (1) est compris entre 90° et 180° (lors d'un mouvement du levier (10) vers le haut) ou -vu dans le même sens angulaire- entre 270° et 360° (lors d'un mouvement du levier (10) vers le bas).

3. Véhicule à deux roues, notamment bicyclette, avec un cadre (1), une roue d'entraînement de chaîne (2) disposée sous le cadre ainsi qu'une roue arrière (5) supportée élastiquement sur un élément support de roue (4) à l'arrière du cadre (1),
avec un premier levier (7) monté pivotant entre le cadre (1) et l' élément support de roue (4),
avec un deuxième levier (10) monté pivotant entre l'extrémité supérieure de l'élément support de roue (4) et le cadre (1),
ainsi qu'avec un élément de suspension (13) monté pivotant entre le deuxième levier (10) et un autre élément de structure,
**caractérisé par le fait**
**que** le palier d'articulation (9) du premier levier (7) sur l'élément support de roue (4) est situé au dessus de l'axe (6) de la roue arrière (5),
**que** le palier d'articulation (9) du premier levier (7) sur l'élément support de roue (4), est écarté de l'axe (6) de la roue arrière (5), en direction du palier d'articulation (11), d'une distance correspondant à 0,045 à 0,8 fois, en particulier 0,25 à 0,4 fois la longueur de l'élément support de roue (4), que l'élément de suspension (13) est monté pivotant entre le cadre (1) et le deuxième levier (10) et
**que**, dans la positon de repos de la suspension, l'angle (w) formé entre, d'une part la droite joignant le palier d'articulation (9) du premier levier (7) sur l'élément support de roue (4) et le palier d'articulation (11) de l'élément support de roue (4) sur le deuxième levier (10) et d'autre part la droite joignant le palier d'articulation (11) de l'élément support de roue (4) sur le deuxième levier (10) et le palier d'articulation (12) du deuxième levier (10) sur le cadre (1) est compris entre 90° et 180° (lors d'un mouvement du levier (10) vers le haut) ou -vu dans le même sens angulaire- entre 270° et 360° (lors d'un mouvement du levier (10) vers le bas).

4. Véhicule selon l'une des revendications 1 à 3,
**caractérisé par le fait que** le palier d'articulation (9) du premier levier (7) sur l'élément support de roue (4) est situé, en direction verticale, au moins 20 mm au dessus de l'axe (6) de la roue arrière (5).

5. Véhicule selon l'une des revendications 1 à 4,
**caractérisé par le fait que** le palier d'articulation (8) du premier levier (7) sur le cadre (1) est situé du palier (3) du plateau d'entraînement de chaîne (2) disposé sous le cadre (1).

6. Véhicule selon la revendication 5 **caractérisé par le fait que** le palier d'articulation (8) est situé au dessus du plateau d'entraînement de chaîne (2).

7. Véhicule selon l'une des revendications 1 à 6,
**caractérisé par le fait qu'**un élément amortisseur est associé à l'élément de suspension (13).
